# EUROPEAN PATENT APPLICATION

(11) **EP 4 215 481 A1**
(43) Date of publication of application: **26.07.2023**
(21) Application number: 22152935.7
(22) Date of filing: 24.01.2022
(51) Int. Cl.: C01B 32/05, H01M 4/00

(54) **AN IMPROVED CARBON PRECURSOR MATERIAL**

(71) Applicant: Rain Carbon bv, 9060 Zelzate (BE); Rain Carbon Germany GmbH, 44579 Castrop-Rauxel (DE)
(72) Inventor: Spahr, Michael, 9060 Zelzate (BE); Kuhnt, Christopher, 44579 Castrop-Rauxel (DE); Claes, Joris, 9060 Zelzate (BE); Denoo, Bram, 9060 Zelzate (BE)
(74) Representative: BiiP cvba

(57) **Abstract**

A carbon precursor material is provided comprising a distillation residue from a distillate, said distillate being a distillate fraction of coal tar and/or petroleum-based raw material, or of coal tar-based and/or petroleum-based pitch, wherein the distillation residue has a softening point between 70 and 120°C Mettler. Further, the present invention provides the use of the carbon precursor material as a binder and/or impregnation material in the manufacturing of graphite electrodes for electric arc furnaces and carbon anodes for aluminum production, and/or the use of the carbon precursor material as coating material for carbon-coated particles for the manufacturing of battery electrodes. In addition, the present invention provides a process for obtaining a carbon precursor material comprising the steps of providing coal tar and/or petroleum-based raw material, or a coal tar-based and/or petroleum-based pitch, exposing the raw material or the pitch to a first vacuum distillation process, thereby obtaining a raw material-based distillate fraction or a pitch-based distillate fraction, subsequently exposing said distillate fraction to a second vacuum distillation process, thereby obtaining a distillation residue being said carbon precursor material.

## Description

### TECHNICAL FIELD

The present invention generally relates to a carbon precursor material.

Further, the present invention relates to a process for producing such carbon precursor material.

More specifically, the present invention generally relates to the use of such carbon precursor material as coating material for carbon coated particles, or as a binder and/or impregnation material in the manufacturing of graphite electrodes for electric arc furnaces and carbon anodes for aluminum production.

In addition, the present invention relates to electrodes, more specifically battery electrodes, comprising electrode material with a particle coating made of such carbon precursor material.

### BACKGROUND

Commercially supplied negative electrode materials used in lithium-ion batteries are conventionally based on graphite but also more and more on silicon oxide, metal silicon, silicon alloys, and composites of carbon or graphite with materials based on silicon, tin, and others.

Many of these negative electrode materials are coated with carbon using coal tar- and petroleum-based pitches as precursors. A number of processes are known to obtain a suitable coating. Typically, applying coating to the electrode material particle surface is done either in a wet process by dissolving the pitch in an organic solvent or dispersing the milled fine pitch powder in water, mixing the solution or suspension with the particles, and drying the mixture before thermally treating it in an inert gas atmosphere at elevated temperatures of 600⁰C-1300⁰C. Also, dry-coating processes are used in which the finely milled pitch is mixed with the electrode material particles. The mixture then is heated in an inert gas atmosphere to melt the pitch and form the superficial layer that is finally carbonized at elevated temperatures and, if required, graphitized.

A first problem known in the art is that conventional carbon coating is not always homogeneously distributed over the electrode particle surfaces, such that a relatively high amount, i.e. a partially relatively thick film of carbon is required to completely cover the particle surface needed to reduce the BET surface area, the electrochemically active surface area wetted by the battery electrolyte and the reactivity of the electrode material towards the electrolyte. Low surface area carbon coatings improve electrochemical parameters of the electrode particles by decreasing charge losses, improving cell safety and charge/discharge cycling stability. However, as the carbon formed at the particle surface contributes less to the reversible capacity of the electrode material compared to the particle core, and as the thickness of the carbon layer also influences the insertion rate of lithium ions into the bulk, thinner coatings are preferred. Without referring to any theory, thin homogeneous coatings are expected when using coating materials showing good wetting and impregnation of the particle surface.

A second problem is that typical pitches derived from coal tar and petrochemical sources contain small particles of carbon but also metal impurities that are detrimental to the quality of the coating layer formed. These particle impurities are usually measured as quinoline insoluble matter (QI content) that is an indicator for the pitch quality. To obtain a good carbon film quality, the QI content should be low. In addition, some metal particle impurities like iron, copper, and zinc give rise to safety issues in the lithium-ion cell. Insoluble constituents reflected by the QI and TI value are disadvantageous in particular for the wet coating process in which the pitch is dissolved in organic solvent like THF, toluene, xylene or hexanes before the solution is mixed with the particulate substrate to be coated.

It is known that typical petroleum-based sources are lower in particle impurities compared to coal tar which is usually accompanied by a lower trace metal content as well. At the same time, typical coal tar-based products have higher coke values, thermal stability, and flash points, i.e. the carbon yield after carbonization of the precursor by thermal treatment under an inert gas atmosphere is higher and safety when processing the precursors at elevated temperatures is improved as well. This is often linked to the molecular structure of the constituents that in the case of petroleum-based sources have a higher degree of alkyl rests that can be cleaved from the aromatic core structures during heating.

In addition, with the changes in steel production moving away from blast furnaces to reduce the emission of greenhouse gases, the availability of coal tar as raw material for coal tar pitch will significantly reduce in the future and as a consequence also the availability of high-quality coal tar.

Given the above, it is an objective of the present invention to provide a new carbon precursor material.

Further, it is an objective of the present invention to provide a new coating material for coating graphite particles for the manufacturing of battery electrodes.

More specifically, it is an objective of the present invention to provide a coating material that has the appropriate characteristics for resulting in a thin coating layer being typically several tens of nanometers thick.

Another objective of the present invention is to provide a coating material that enhances the quality of the carbon coating layer formed at the surface of graphite particles for the manufacturing of battery electrodes.

Another objective is to provide a pitch-based carbon coating that is suitable for use in water-based electrode manufacturing processes.

A further objective is to decrease safety issues and specific charge losses in the lithium-ion cell as well as to increase the charge/discharge cycling stability.

Furthermore, it is a general objective of the present invention to provide an alternative for coal tar pitch-based coating that allows an increased security of supply and meets the necessary requirements for use as hydrocarbon coating material in the manufacturing of battery electrodes, in particular Li-ion batteries.

Another general objective of the present invention is to provide an alternative pitch-based coating resulting in similar coke values and softening points, and similar processing and performance of battery electrodes, in particular Li-ion batteries.

### SUMMARY

In a first aspect in accordance with the present invention, a carbon precursor material is provided comprising a distillation residue from a distillate, said distillate being a distillate fraction of coal tar and/or petroleum-based raw material, or of coal tar-based or petroleum-based pitch, wherein the distillation residue has a softening point between 70 and 120°C Mettler.

In a second aspect, the present invention provides the use of the carbon precursor material used as a binder and/or impregnation material in the manufacturing of graphite electrodes for electric arc furnaces and carbon anodes for aluminum production.

In a third aspect, the present invention provides the use of the carbon precursor material as coating material and/or binding material for carbon-coated particles for the manufacturing of battery electrodes.

In a fourth aspect in accordance with the present invention, a graphite electrode for electric arc furnaces or a carbon anode for aluminum production is provided comprising the converted carbon precursor material.

In a fifth aspect, a battery electrode is provided comprising the converted carbon precursor material, as well as a lithium-ion battery comprising such electrode.

In a sixth aspect in accordance with the present invention, a process for obtaining a carbon precursor material comprising the steps of:
- providing coal tar and/or petroleum-based raw material, or a coal tar-based and/or petroleum-based pitch,
- exposing the raw material or the pitch to a first vacuum distillation process, thereby obtaining a raw material-based distillate fraction or a pitch-based distillate fraction,
- subsequently exposing said distillate fraction to a second vacuum distillation process, thereby obtaining a distillation residue being said carbon precursor material.

### DETAILED DESCRIPTION

In a first aspect in accordance with the present invention, a carbon precursor material is provided comprising a distillation residue from a distillate, said distillate being a distillate fraction of coal tar and/or petroleum-based raw material, or of coal tar-based and/or petroleum-based pitch, wherein the distillation residue has a softening point between 70 and 120°C Mettler, preferably 80 and 100°C Mettler.

This carbon precursor material is in particular suitable for the coating of electrode materials with a thin layer of carbon, because it comprises a residue of the distillate fraction derived from the distillation of coal tar pitch or petroleum pitch which therefore is substantially free from solid fine particles resulting in a quinoline insoluble content of below 2 % and preferably below 1 %. Further, such residue typically has a low trace metal content. The low softening point and adapted melt viscosity in combination with a high number of aromatic constituents characterized by the asphaltenes and resin content allows an improved wetting and impregnation of the particle surface and during the thermal treatment give rise to a smooth and homogeneous carbon coating.

The high coking value allows to form a carbon layer at high yield limiting the amount of volatile matter formed in the carbonization process and reaching a high carbon yield. Limited amount of volatile matter decreases the porosity of the coating, which in turn limits the reduction of the BET specific surface area (BET SSA).

The carbon precursor's high aromatic content improves carbon morphology and density of the final coating layer. In this way a homogeneous coating and complete surface coverage at a thin layer thickness is achieved with a low amount of carbon and carbon precursor. It leads to a carbon morphology that readily graphitizes under graphitization conditions.

The high flashpoints and low viscosities in the molten state may make the carbon precursor material also suitable for direct coating or direct binding and coating of particles in liquid state. In this case the freshly produced carbon precursor material may be sprayed directly in the particles to be coated or agglomerated and coated while the particles being fluidized by an intensive mixer or fluidized bed. Alternatively, the carbon precursor material may be dispersed by intensive mixing of molten carbon precursor material and the particles, e.g. by means of an intensive mixing unit.

In an embodiment of the present invention, the distillation residue has a toluene insoluble content of less than 12 % and/or a quinoline insoluble content of less than 1% and/or a beta-resins content of less than 12 %, and/or a TGA under nitrogen (residue at 1000°C in nitrogen, N₂, in %) of 10 to 30 %. Preferably, the carbon precursor may have a toluene insoluble content of less than 5 %, a quinoline insoluble content of less than 1 % and a beta-resins content of less than 5 % which may enhance its applicability as coating material for graphite particles in a solvent-based coating process, as a lower toluene insoluble content improves solvability.

In a particular embodiment in accordance with the present invention, the distillate fraction is anthracene oil and/or pyrene oil and/or heavy aromatic oil, preferably light anthracene oil distillate fraction with a distillation range of 300 to 370°C, or pyrene oil with a distillation range of 350 to 550°C, or heavy aromatic oil with a distillation range of 300°C to 550°C. Using such high boiling distillates, a further treatment in a reaction step prior to the distillation could further increase the yield for the residue in the second distillation.

In another particular embodiment, the distillate fraction is a pitch-based distillate fraction, wherein the coal tar-based pitch used as starting material has a softening point of 80 to 130°C Mettler and/or the petroleum-based pitch used as starting material has a softening point of 80 to 130°C Mettler.

In another embodiment in accordance with the present invention, the carbon precursor material may additionally comprise a coal tar-based and/or petroleum-based pitch having a softening point of 130 to 300°C Mettler. In this case, the carbon precursor material may be a mixture of the distillation residue and a coal tar-based and/or petroleum-based pitch having a softening point of 130 to 300°C Mettler. In the light of particle coating applications, a softening point above 120°C may allow the carbon precursor to be dried and milled to fine particles used in a dry particle coating process.

Preferably, the carbon precursor material may have a melt viscosity of less than 5000 mPa.s at 140 °C. Such low melt viscosity enhances wetting and impregnation of the particle surface, such that a thin film of carbon being homogeneously distributed at the particle surface is achieved. Enhanced surface wetting and impregnation results in good coverage of the geometrical particle surface but also of the micro- and mesopores as well as the roughness that typically can be found at the particle surface.

In an embodiment of the present invention, a carbon precursor material may be used comprising a concentration of at least of at least 75 % , preferably above 85 % by weight of asphaltenes as measured by the SARA method (Clay-Gel Absorption Chromatographic Method according to ASTM D2007), resulting in respectively increasing coke values. The pitch ensures a dense (low porosity) homogeneous carbon coating of the electrode material surface lowering the surface reactivity towards the electrolyte as well the surface area of the electrode material being in direct contact with the battery electrolyte and in addition a good electrical conductivity and particle contact of the electrode material in the battery cell electrode.

In another embodiment in accordance with the present invention, the carbon precursor material may have a B[a]P content of less than 9000 ppm and/or a 16 EPA-PAH sum (Polycyclic Aromatic Hydrocarbons according to US Environmental Protection Agency (EPA)) of below 9 %. A sufficiently low B[a]P content and/or 16 EPA-PAH um results obviously in an improved environmental friendliness compared to pure coal tar derived pitch.

In a further embodiment, the carbon precursor material may have a coke yield of at least 40 % ALCAN, or more preferably of at least 50 % ALCAN. As the carbon precursor material is converted into carbon during the carbonization process, a sufficiently high coke yield allows avoiding a high porosity in the resulting graphite particles due to fewer volatiles formed during the carbonization process. A dense carbon layer may be formed with a morphology that is advantageous for the formation of an efficient solid electrolyte interphase at the electrode particle surface. In addition, the nature and quality of the carbon film formed at the particle surface influences the charge losses as well, besides the electrochemically active electrode surface area being in direct contact with the electrolyte of the battery cell.

In an embodiment, the carbon precursor material may have a coke yield of 40-60 % according to the ALCAN method (DIN 51905) and TGA residue under nitrogen between 10 and 30 %, resulting in improved wetting and impregnation of the particle surface. The high carbon yield and composition may form a dense carbon layer with a morphology that is advantageous for the formation of an efficient solid electrolyte interphase at the electrode particle surface. In addition, the carbon precursor may be suitable for being mixed with a high melting petroleum pitch and adding complementary constituents that influence an advantageous carbon morphology.

In a further embodiment, the carbon precursor material may have a flashpoint of at least 240°C, preferably at least 260°C, allowing to process the pitch according to safety requirements as may be required in hot mixing processes.

In a particular embodiment of the present invention, the carbon precursor material may have a softening point above 120°C Mettler. In the light of particle coating applications, a softening point above 120°C may allow the carbon precursor to be milled to fine particles used in a dry particle coating process. In this case, the carbon precursor material may be a mix of the distillation residue and a coal tar-based and/or petroleum-based pitch having a softening point of 130 to 300°C Mettler. The ratio of distillation residue vs pitch may be 3:1 to 1:4, preferably 2:1 to 1:2, and even more preferably 1:1 to 1:2.

In a particular embodiment of the present invention, the carbon precursor material may be used to coat and/or bind the particles of electrode materials like graphite, silicon, silicon oxide, or carbonaceous composites thereof with a carbon surface layer, thereby obtaining carbonaceous powdered materials or powders.

The use of the carbon precursor material forms, at low precursor amount, a thin and homogeneous coating layer of carbon at the surface of electrode material particles used in battery electrodes, in particular in the negative electrode of lithium-ion batteries.

In an aspect in accordance with the present invention, a battery electrode is provided comprising the converted carbon precursor material used as carbon coating of particles. Such carbon coating may result in a BET specific surface area reduction of at least 40 % at a pitch amount of 7 wt.% for spherical natural graphite with a BET SSA of 6 m²/g and an average particle size of 15 micron used as electrode material in the electrode. The coulombic efficiency of an electrode containing the coated natural graphite (BET 3 m²/g) may increase above 90 %.

In addition, the present invention provides the use of the carbon precursor material as described throughout this text as a binder and/or impregnation material in the manufacturing of aggregated carbon-containing composite particles used in battery electrodes, in the manufacturing of graphite electrodes for electric arc furnaces and carbon anodes for aluminum production.

In accordance with the present invention, a process for obtaining a carbon precursor material is provided comprising the steps of:
- providing coal tar and/or petroleum-based raw material, or a coal tar-based and/or petroleum-based pitch,
- exposing the raw material or the pitch to a first vacuum distillation process, thereby obtaining a raw material-based distillate fraction or a pitch-based distillate fraction,
- Subsequently exposing said distillate fraction to a second vacuum distillation process, thereby obtaining a distillation residue being said carbon precursor material.

In a particular embodiment of the present invention, the distillate fraction is a pitch-based distillate fraction, wherein the coal tar-based pitch used as starting material has a softening point of 80 to 130°C Mettler and/or the petroleum-based pitch used as starting material has a softening point of 80 to 130°C Mettler, thereby resulting in a distillation residue after second vacuum distillation step with a softening point of 80 to 120°C Mettler.

In a preferred embodiment of a process according to the present invention, the coal tar-based pitch with a softening point of 80-130°C is obtained by vacuum distillation of coal tar.

Preferably the petroleum-based pitch with a softening point of 80-130°C is obtained by vacuum distillation of petroleum-based materials like for example a pyrolysis fuel oil, aromatic cracker bottom oil, or a fluid catalytic cracker decant oil, gas oil or other heavy aromatic petroleum-based streams.

In another particular embodiment of the present invention, the distillate fraction is a raw material-based distillate fraction, wherein the distillate fraction is light anthracene oil with a distillation range of 300 to 370°C, or pyrene oil with a distillation range of 350 to 550°C, or heavy aromatic oil with a distillation range of 300°C to 550°C.

In an embodiment in accordance with the present invention, the distillation residue may be mixed in the molten state with petroleum or coal tar-based pitch to reach a softening point above ca. 120°C, thereby enabling to mill it to fine particles used in a dry particle coating process. More specifically, the distillation residue may be mixed with petroleum-based pitch with a softening point of 130 to 300°C Mettler.

In a further embodiment in accordance with the present invention aiming to increase the yield of the distillation residue, the distillate fraction may be thermally treated in air at temperatures above 250°C, preferably above 300°C, preferably above 350°C before being exposed to the second vacuum distillation process. The thermal reaction initiates polymerization and condensation reactions that can be further accelerated in the presence of catalysts like an organic peroxide, oxygen, aluminum trichloride, boron trifluoride, aluminum salts, acidic zeolites, or a superacid.

The process as described throughout this text may be part of the manufacturing of a battery electrode or may be part of the manufacturing of graphite electrodes for electric arc furnaces or carbon anodes for aluminum production.

A benefit of a process in accordance with the present invention is that it may allow keeping the amount of asphaltenes of the carbon coating precursor as measured by SARA at a similar level compared to the known coal tar-based battery electrode coating precursors. In addition, other pitch properties may not be degraded compared to known coal tar coating precursors. At the same time the rheology, wetting, and impregnation properties of the said product makes it ideal for the use as carbon precursor for coating of particles with a thin layer of carbon or as impregnation precursor for the manufacture of electrode bodies for steel production in electric arc furnaces.

An additional benefit is that such process may result in that the coke value of the carbon precursor material can be kept at a high level, e.g., at least 40 % ALCAN at a softening point of 70-120°C Mettler, or at least 50% at a softening point above 100°C Mettler.

In an embodiment of the present invention, the first and/or second vacuum distillation process steps are performed at vacuum levels between 0.1 and 400 mbar, preferably 0.1 and 250 mbar, and at temperatures between 200 and 400°C, preferably between 280 and 370°C.

A process in accordance with the present invention may result in a distillation residue having a toluene insoluble content of less than 12 %, a quinoline insoluble content of less than 2 % and a beta-resins content of less than 12 %, or even a toluene insoluble content of less than 5 %, a quinoline insoluble content of less than 1 % and a beta-resins content of less than 5 %.

A process in accordance with the present invention allows a strict control and prevention of potential mesophase formation for low secondary quinoline insoluble amounts in the distillation residue causing thin homogeneous coatings at the particle surface.

Below table illustrates two examples of carbon precursor material formulations in accordance with an embodiment of the present invention, namely (i) a carbon precursor material containing only a distillate residue as described throughout this text and (ii) a carbon precursor material containing 45.5 % distillate residue and 54.5 % petroleum-based pitch:

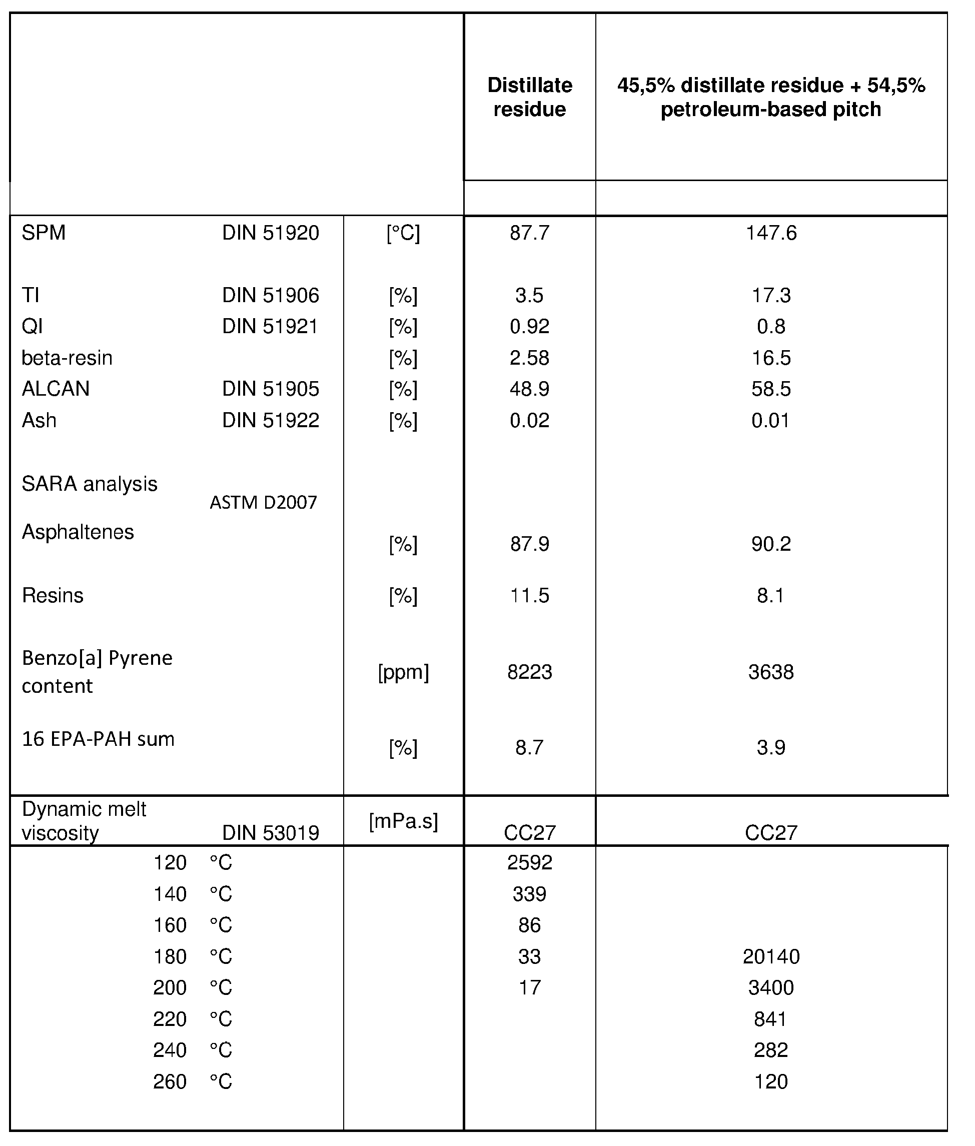

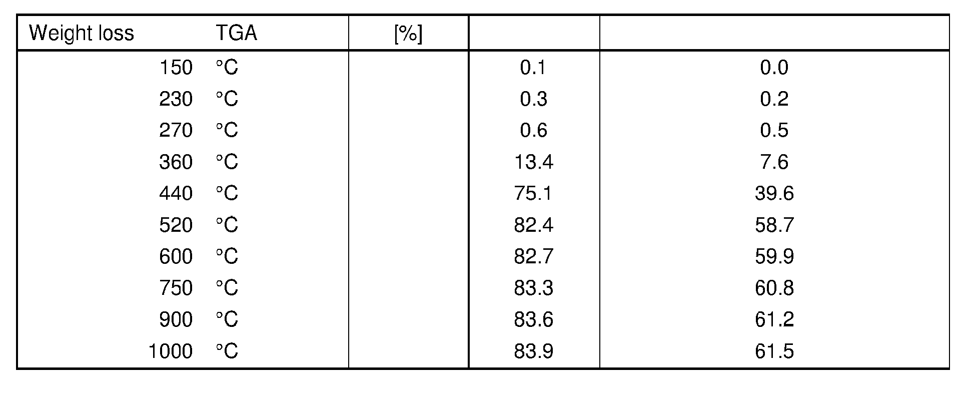

Below table provides an overview of analytical procedures of the product parameters as used in this text:

| **Analysis** | **Unit** | **Norm/Method** |
|---|---|---|
| Softening point, Mettler | ⁰C | ASTM D3104 |
| Quinoline insoluble matter, Ql | % (by weight) | DIN 51921 |
| Toluene insoluble matter, TI | % (by weight) | DIN 51906 |
| Beta-resins | % (by weight) | Calculation TI-QI |
| Coke yield (value), ALCAN | % (by weight) | ASTM D4715 |
| Ash (900 °C) | % (by weight) | ASTM D2415 |
| Benzo[a]pyrene content | ppm | ISO 18287 |
| 16 EPA-PAH sum | % (by weight) | ISO 18287 |
| Flash point (small scale equilibrium) | °C | ISO 3679 |
| Dynamic melt viscosity at temperatures of 120 ⁰C-260 ⁰C | mPa.s | ASTM D5018 |
| SARA (final product) | | ASTM D2007 |
| -asphaltenes | % (by weight) | |
| -resins | % (by weight) | |

## Claims

1. A carbon precursor material comprising a distillation residue from a distillate, said distillate being a distillate fraction of coal tar and/or petroleum-based raw material, or of coal tar-based and/or petroleum-based pitch, wherein the distillation residue has a softening point between 70 and 120°C Mettler.

2. The carbon precursor material according to claim 1, wherein the distillation residue has a coking value of 40 to 60% ALCAN.

3. The carbon precursor material according to any of claim 1, wherein the distillation residue has a toluene insoluble content of less than 12% and/or a quinoline insoluble content of less than 2 % and/or a beta-resins content of less than 11%.

4. The carbon precursor material according to any of the claims 1 to 3, wherein the distillate fraction is light anthracene oil with a distillation range of 300 to 370°C, or pyrene oil with a distillation range of 350 to 550°C, or heavy aromatic oil with a distillation range of 300°C to 550°C.

5. The carbon precursor material according to any of the claims 1 to 3, wherein the distillate fraction is a pitch-based distillate fraction, wherein the coal tar-based pitch used as starting material has a softening point of 80 to 130°C Mettler and/or the petroleum-based pitch used as starting material has a softening point of 80 to 130°C Mettler.

6. The carbon precursor material according to any of the above claims, additionally comprising a coal tar-based and/or petroleum-based pitch having a softening point of 130 to 300°C Mettler.

7. Use of the carbon precursor material according to any of the above claims as a binder and/or impregnation material in the manufacturing of carbon-containing composite particles used in battery electrodes, in the manufacturing of graphite electrodes for electric arc furnaces and carbon anodes for aluminum production.

8. Use of the carbon precursor material according to any of the above claims as coating material for carbon coated particles for the manufacturing of battery electrodes.

9. A graphite electrode for electric arc furnaces or carbon anode for aluminum production comprising converted carbon precursor material in accordance with any of the claim 1 to 6.

10. A battery electrode comprising converted carbon precursor material in accordance with any of the claim 1 to 6.

11. A lithium-ion battery comprising an electrode according to claim 10.

12. A process for obtaining a carbon precursor material comprising the steps of:
- providing coal tar and/or petroleum-based raw material, or a coal tar-based and/or petroleum-based pitch,
- exposing the raw material or the pitch to a first vacuum distillation process, thereby obtaining a raw material-based distillate fraction or a pitch-based distillate fraction,
- subsequently exposing said distillate fraction to a second vacuum distillation process, thereby obtaining a distillation residue being said carbon precursor material.

13. The process according to claim 12 wherein the distillate fraction is a pitch-based distillate fraction and wherein the coal tar-based pitch has a softening point of 80 to 130°C Mettler and/or wherein the petroleum-based pitch has a softening point of 80 to 130°C Mettler.

14. The process according to claim 12, wherein the distillate fraction is a raw material-based distillate fraction, and wherein the distillate fraction is light anthracene oil with a distillation range of 300 to 370°C, or pyrene oil with a distillation range of 350 to 550°C, or heavy aromatic oil with a distillation range of 300°C to 550°C.

15. The process according to any of the claim 12 to 14, additionally comprising the step of adding to the distillation residue a petroleum-based pitch with a softening point of 130 to 300°C Mettler.

16. The process according to any of the claim 12 to 15, wherein the distillate fraction is thermally treated in air and/or in the presence of a catalyst before being exposed to the second vacuum distillation process.

17. A process for manufacturing a battery electrode comprising the process of any of the claims 12 to 16.

18. A process for the manufacturing of graphite electrodes for electric arc furnaces or carbon anodes for aluminum production comprising the process of any of the claims 12 to 16.
